# EUROPEAN PATENT SPECIFICATION

(11) **EP 3 267 161 B1**
(45) Date of publication and mention of the grant of the patent: **26.08.2020**
(21) Application number: 16758845.8
(22) Date of filing: 26.02.2016
(51) Int. Cl.: G01F 1/684

(54) **AIR FLOW RATE DETECTING DEVICE**
VORRICHTUNG ZUR ERKENNUNG DER LUFTSTRÖMUNGSRATE
DISPOSITIF DE DÉTECTION DE DÉBIT D'AIR

(30) Priority: 05.03.2015 JP 2015043089
(43) Date of publication of application: 10.01.2018
(73) Proprietor: Hitachi Automotive Systems, Ltd., Hitachinaka-shi, Ibaraki 312-8503 (JP)
(72) Inventor: YOGO Takayuki, Hitachinaka-shi Ibaraki 312-8503 (JP); MIKI Takahiro, Hitachinaka-shi Ibaraki 312-8503 (JP); HOSHIKA Hiroaki, Hitachinaka-shi Ibaraki 312-8503 (JP); ABE Hiroyuki, Hitachinaka-shi Ibaraki 312-8503 (JP)
(74) Representative: MERH-IP Matias Erny Reichl Hoffmann Patentanwälte PartG mbB
(86) International application number: PCT/JP2016/055743
(87) International publication number: WO 2016/140151

(56) References cited:
- EP-A1- 2 835 621
- JP-A- 2008 020 193
- JP-B2- 3 545 637
- JP-B2- 5 648 021
- US-A1- 2005 062 121
- US-A1- 2014 190 273
- US-B2- 8 763 452

## Description

### Technical Field

The present invention relates to an air flow rate detection device of intake air of an internal combustion engine.

### Background Art

PTL 1 discloses an example of an air flow rate detection device which has a structure in which a flow rate detection chip including a thin film portion and a mounting surface of a support member are fixed by an adhesive sheet with an area that is not subjected to adhesion (non-adhesive area) is provided in at least a part thereof.

In addition, PTL 2 discloses a structure that is opened using at least one notch only on a side facing a reverse direction of a flow direction in order to aerate a hollow chamber on a rear surface of a diaphragm of a flow rate detection element.

### Citation List

### Patent Literature

PTL 1: JP 2009-250726 A
PTL 2: JP 2001-508879 A

In US 2014/190273 A1 a technique for suppressing performance variations for a flow sensor is discussed. A semiconductor chip is configured to be covered with a resin in a stage in which a flow sensing unit formed on a semiconductor chip is exposed. Since an upper surface of the resin is higher than an upper surface of the semiconductor chip by sealing the resin on a part of the upper surface of the semiconductor chip in a direction parallel to an airflow the airflow around the flow sensing unit can be stabilized. In EP 2 835 621 A1 another technique for suppressing performance variations for a flow sensor is discussed.

### Summary of Invention

### Technical Problem

In the case of the structure disclosed in PTL 1 in which the flow rate detection chip including the thin film portion is fixed to the support member using the adhesive sheet with the part that does not adhere thereto, however, a gap of an interface between the flow rate detection chip and the adhesive sheet is small, and air in a cavity on a rear surface of the thin film portion of the flow rate detection chip thermally shrinks. Thus, there is a risk that stress may apply to the thin film portion of the flow rate detection chip. Further, when the stress applies to the thin film portion, there is a risk that the thin film portion is destroyed or the flow rate detection accuracy deteriorates. Therefore, it is necessary to reduce the stress to be applied to the flow rate detection chip in order to achieve improvement in detection accuracy.

In addition, there is room for improvement in the case of the structure disclosed in PTL 2 which is opened using the notch on the side facing the reverse direction of the flow direction in order to aerate the hollow chamber on the rear surface of the diaphragm since flowing of air into the diaphragm rear surface in the flowing in the reverse flow direction is not considered. In addition, deterioration in characteristic accuracy caused by an adhesion variation is not considered, and accordingly, it is necessary to reduce the adhesion variation.

The present invention has been made in view of the above-described points, and an object thereof is to provide an air flow rate detection device that mitigates stress to be applied to a flow rate detection unit, reduces a mounting variation of the flow rate detection unit, and reduces air flowing into a diaphragm rear surface.

### Solution to Problem

In order to solve the above-described problems, an air flow rate detection device according to the present invention includes: a flow rate detection unit which includes a diaphragm detecting an air flow rate of a gas to be measured; a circuit board to which the flow rate detection unit is mounted; and a housing which houses the circuit board. In the air flow rate measurement device, the flow rate detection unit and the circuit board are fixed by a sheet-like adhesive such that a surface parallel to the flow direction of the flow rate detection unit is opened by a notch in the sheet-like adhesive, in a direction that extends more along an axis that is parallel to the flow direction than along an axis that is perpendicular to the flow direction and is sealed by an elastic body that is arranged perpendicular to the flow direction.

### Advantageous Effects of Invention

According to the present invention, it is possible to mitigate the stress to be applied to the flow rate detection unit, reduce the mounting variation of the flow rate detection unit, and reduce the air flowing into the diaphragm rear surface. Incidentally, other objects, configurations, and effects will be apparent from the following description of embodiments. Brief Description of Drawings

[FIG. 1] FIG. 1 is a system diagram illustrating an embodiment in which an air flow rate measurement device according to the present invention is used in an internal combustion engine control system.
[FIG. 2-1] FIG. 2-1 is a front view of the air flow rate measurement device.
[FIG. 2-2] FIG. 2-2 is a back view of the air flow rate detection device.

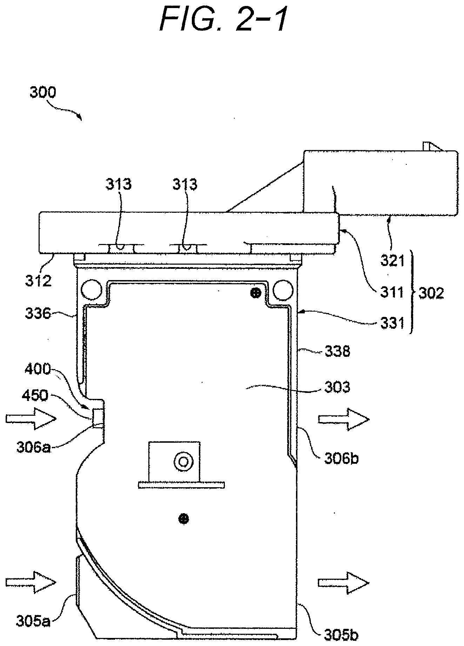

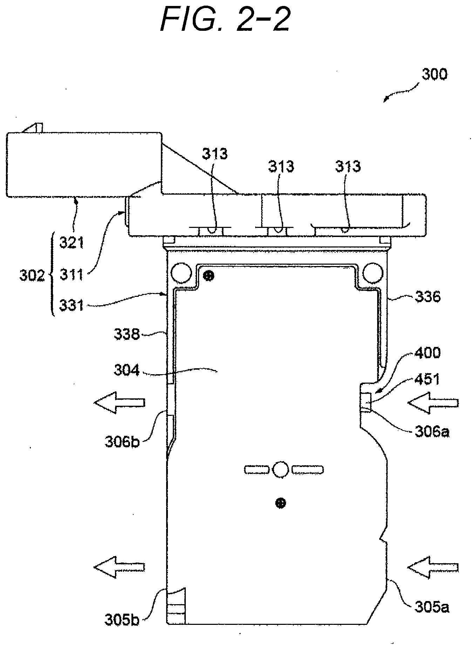

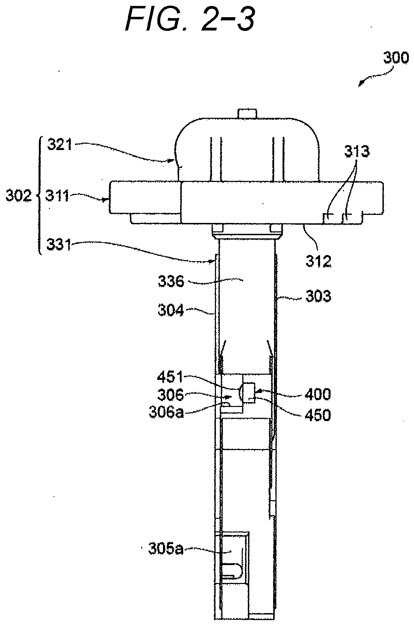

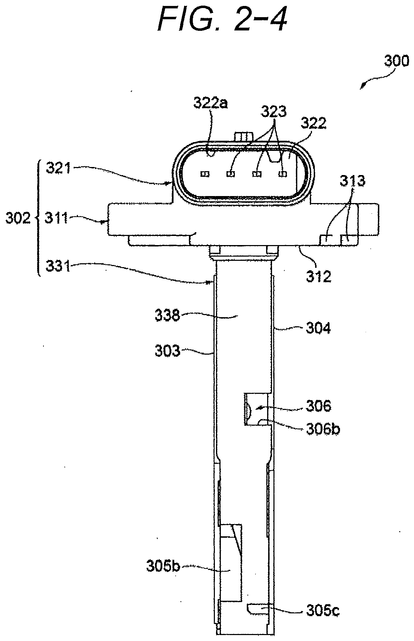

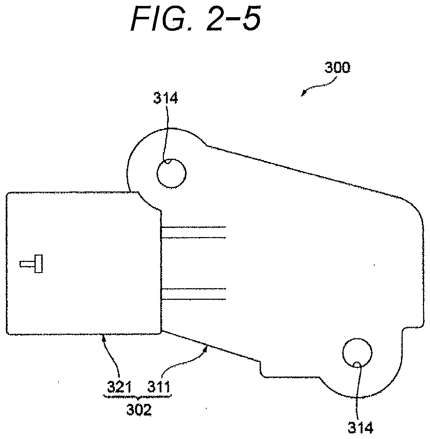

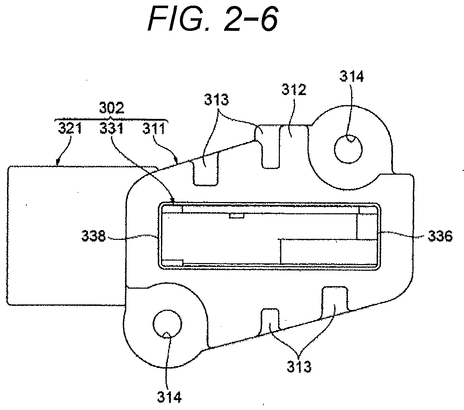

[FIG. 2-3] FIG. 2-3 is a left side view of the air flow rate detection device.
[FIG. 2-4] FIG. 2-4 is a right side view of the air flow rate detection device.
[FIG. 2-5] FIG. 2-5 is a plan view of the air flow rate detection device.
[FIG. 2-6] FIG. 2-6 is a bottom view of the air flow rate detection device.

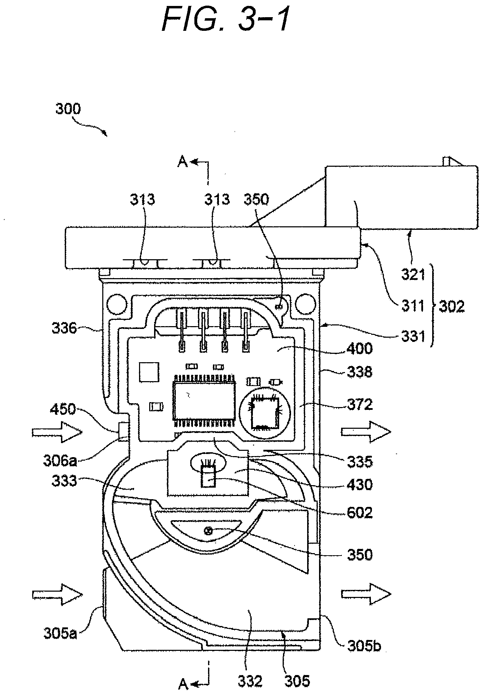

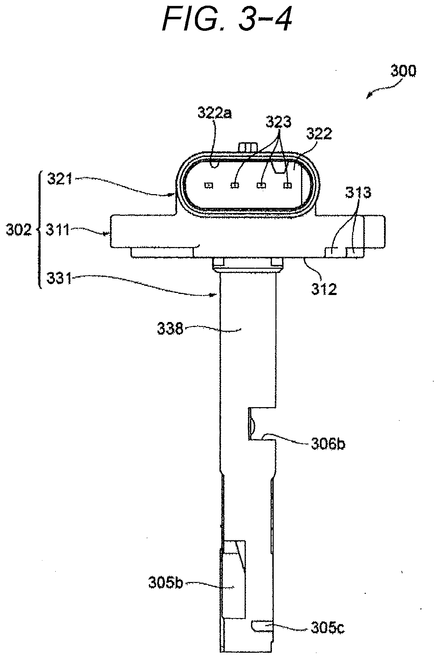

[FIG. 3-1] FIG. 3-1 is a front view illustrating a state in which a front cover is removed from the air flow rate detection device.

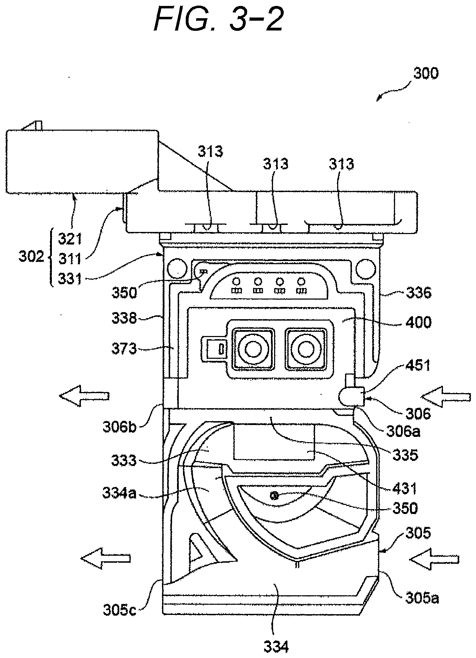

[FIG. 3-2] FIG. 3-2 is a back view illustrating a state in which a rear cover is removed from the air flow rate detection device.

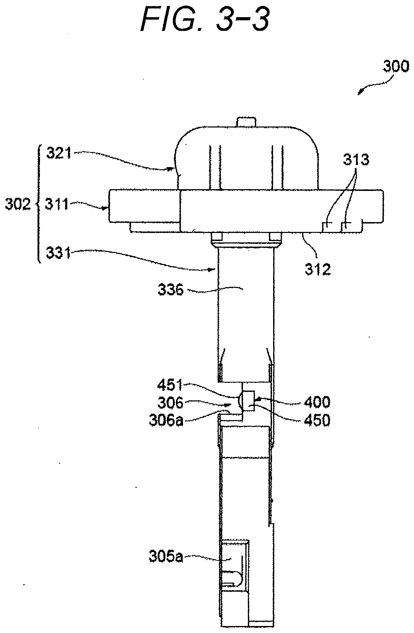

[FIG. 3-3] FIG. 3-3 is a left side view illustrating a state in which the front cover and the rear cover are removed from the air flow rate detection device.
[FIG. 3-4] FIG. 3-4 is a right side view illustrating a state in which the front cover and the rear cover are removed from the air flow rate detection device.

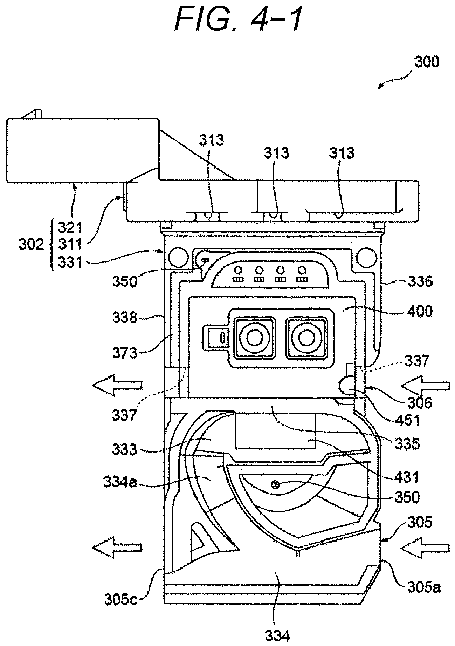

[FIG. 4-1] FIG. 4-1 is a back view for describing another embodiment of a housing.

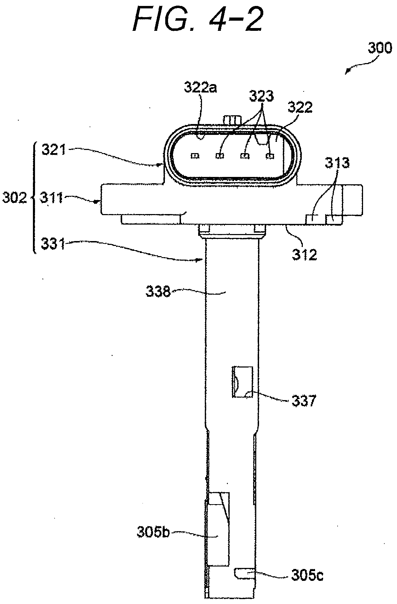

[FIG. 4-2] FIG. 4-2 is a right side view of the housing illustrated in FIG. 4-1.

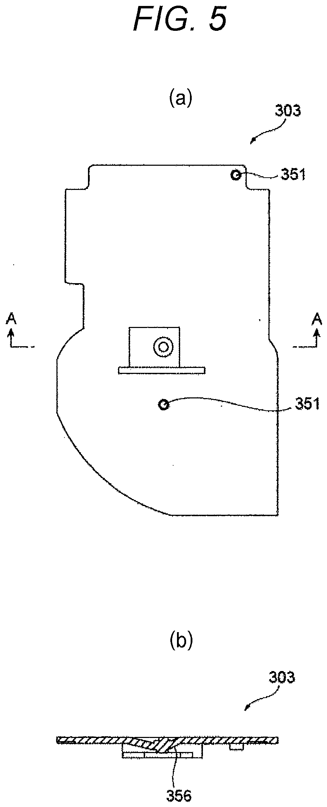

[FIGS. 5(a) and 5(b)] FIGS. 5(a) and 5(b) are diagrams for describing a configuration of a front-side cover.

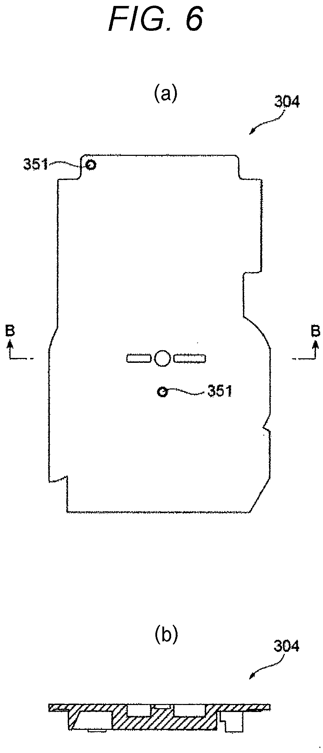

[FIGS. 6(a) and 6(b)] FIGS. 6(a) and 6(b) are diagrams for describing a configuration of a back-side cover.

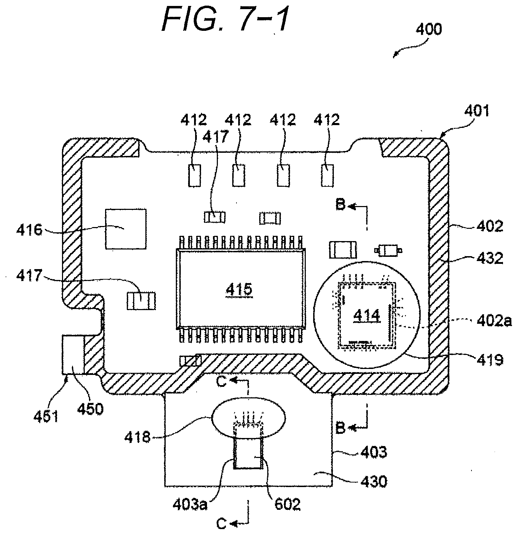

[FIG. 7-1] FIG. 7-1 is a front view of a circuit board.

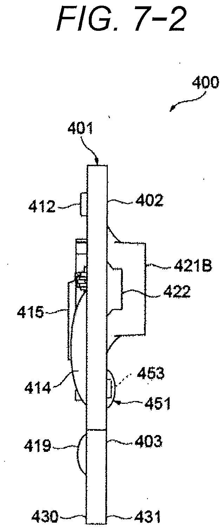

[FIG. 7-2] FIG. 7-2 is a right side view of the circuit board.

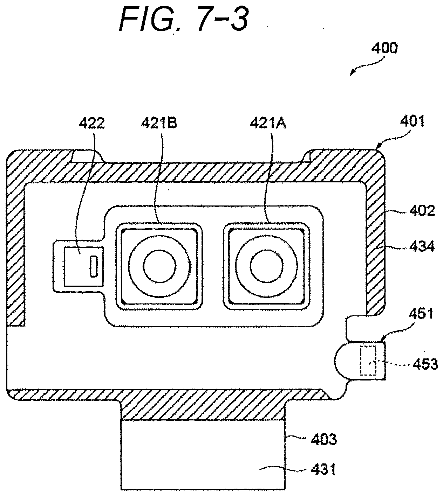

[FIG. 7-3] FIG. 7-3 is a back view of the circuit board.

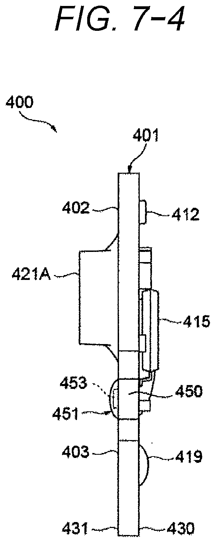

[FIG. 7-4] FIG. 7-4 is a left side view of the circuit board.

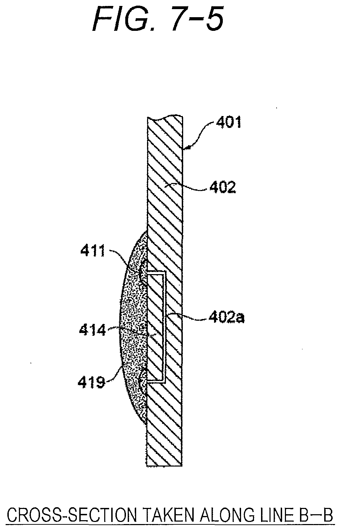

[FIG. 7-5] FIG. 7-5 is a cross-sectional view taken along a line B-B of FIG. 7-1.

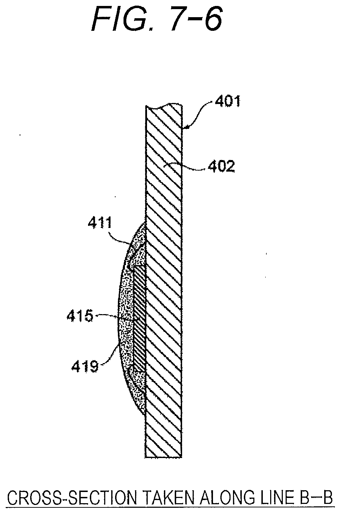

[FIG. 7-6] FIG. 7-6 is a diagram illustrating another embodiment which corresponds to a cross-section taken along the line B-B of FIG. 7-1.

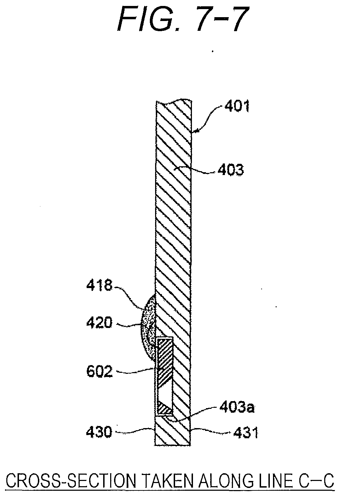

[FIG. 7-7] FIG. 7-7 is a cross-sectional view taken along a line C-C of FIG. 7-1.

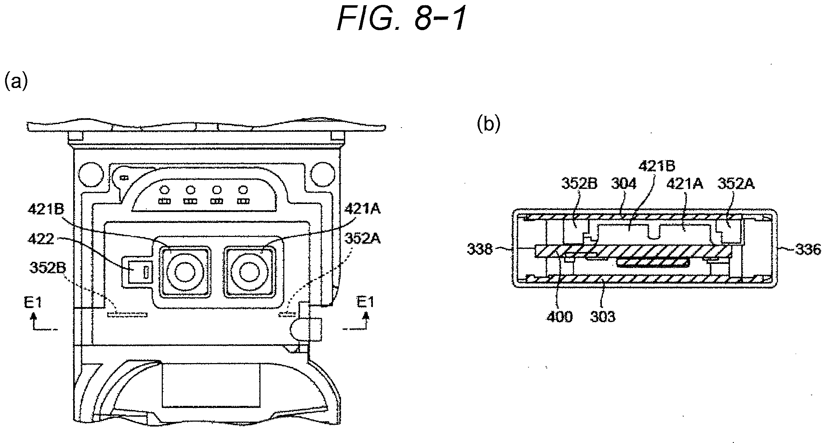

[FIG. 8-1(a) and 8-1(b)] FIGS. 8-1(a) and 8-1(b) are diagrams for describing a structure of a sensor chamber, FIG. 8-1(a) is an enlarged view of the sensor chamber, and FIG. 8-1(b) is a cross-sectional view taken along a line E1-E1 of FIG. 8-1(a).

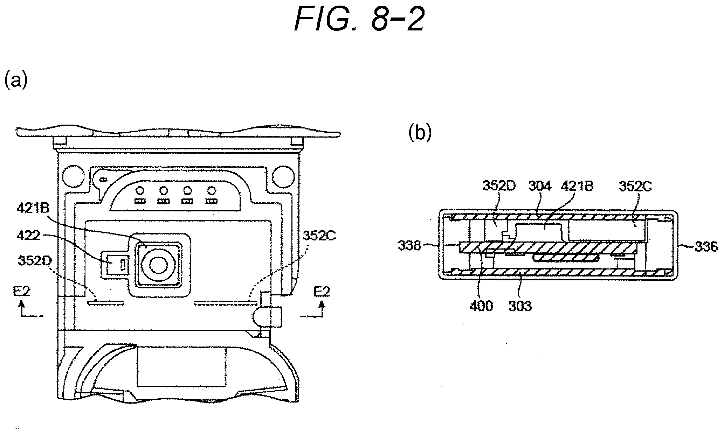

[FIG. 8-2(a) and 8-2(b)] FIGS. 8-2(a) and 8-2(b) are diagrams for describing a structure of another embodiment of the sensor chamber, FIG. 8-2(a) is an enlarged view of the sensor chamber, and FIG. 8-2(b) is a cross-sectional view taken along a line E2-E2 of FIG. 8-2(a).

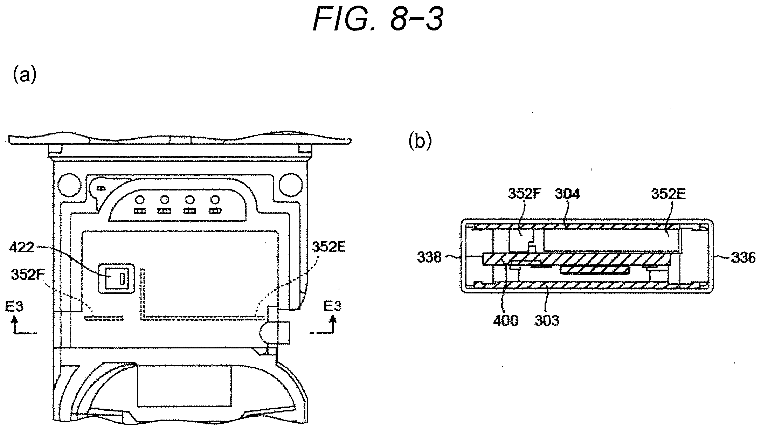

[FIG. 8-3(a) and 8-3(b)] FIGS. 8-3(a) and 8-3(b) are diagrams for describing a structure of still another embodiment of the sensor chamber, FIG. 8-3(a) is an enlarged view of the sensor chamber, and FIG. 8-3(b) is a cross-sectional view taken along a line E3-E3 of FIG. 8-3(a).

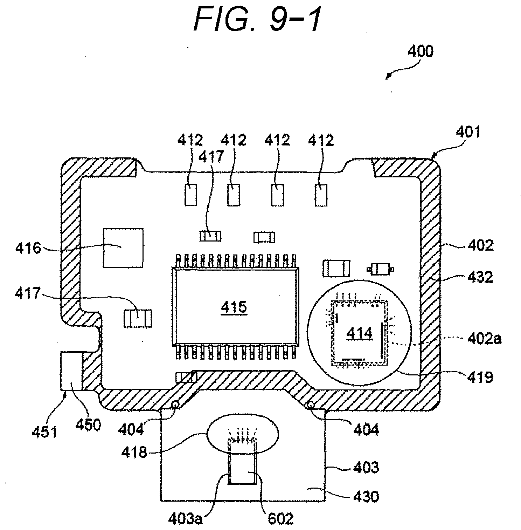

[FIG. 9-1] FIG. 9-1 is a front view illustrating another embodiment of the circuit board.

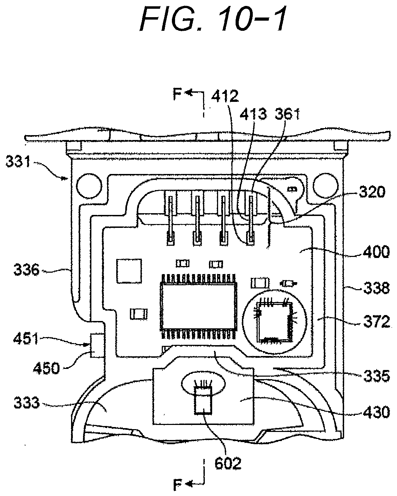

[FIG. 10-1] FIG. 10-1 is a diagram for describing a structure of a terminal-connecting portion.

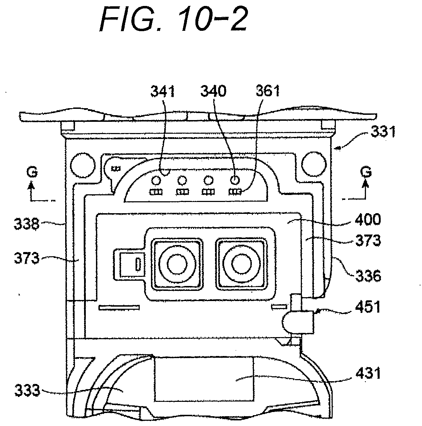

[FIG. 10-2] FIG. 10-2 is a diagram for describing the structure of the terminal-connecting portion.

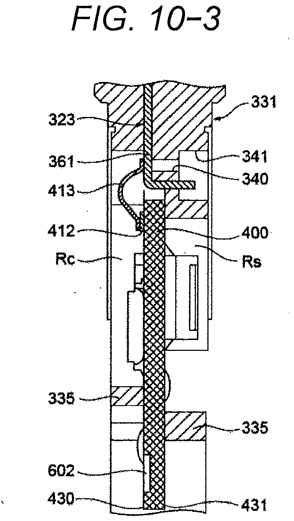

[FIG. 10-3] FIG. 10-3 is a cross-sectional view taken along a line F-F of FIG. 10-1.

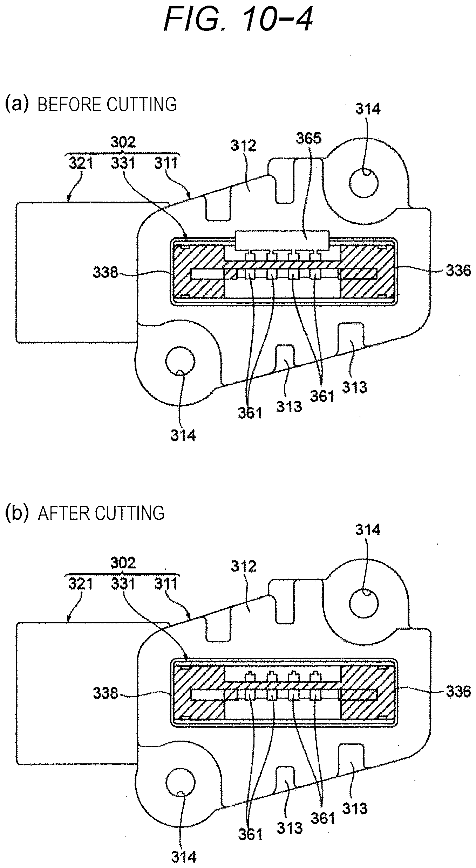

[FIGS. 10-4(a) and 10-4(b)] FIGS. 10-4(a) and 10-4(b) are cross-sectional views taken along a line G-G of FIG. 10-2.

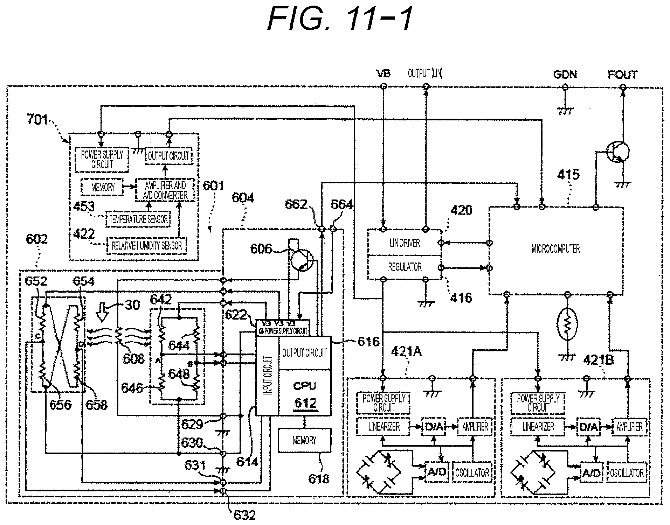

[FIG. 11-1] FIG. 11-1 is a diagram for describing an example of a circuit configuration of the air flow rate detection device.

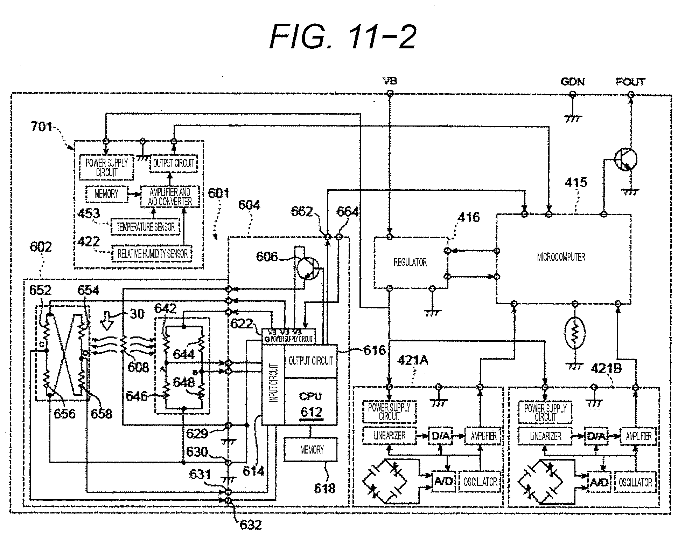

[FIG. 11-2] FIG. 11-2 is a diagram for describing another embodiment of the circuit configuration of the air flow rate detection device.

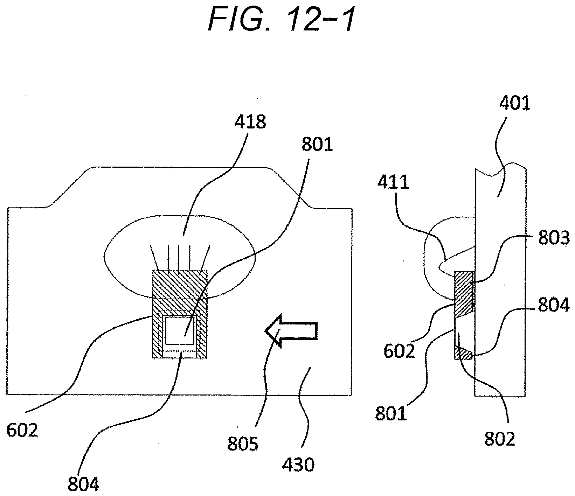

[FIG. 12-1] FIG. 12-1 is a diagram for describing an example of an external view of a protruding portion of the circuit board.

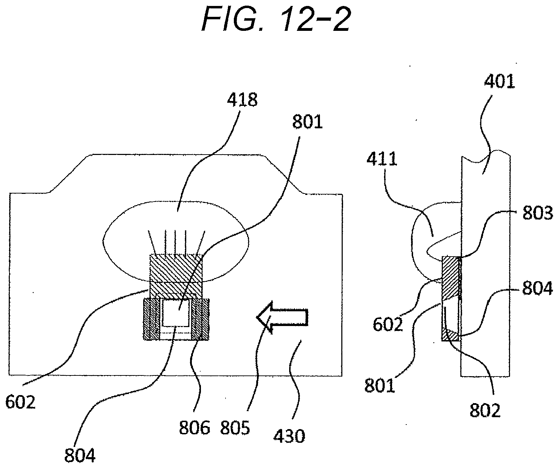

[FIG. 12-2] FIG. 12-2 is a diagram for describing another embodiment of the external view of the protruding portion of the circuit board.

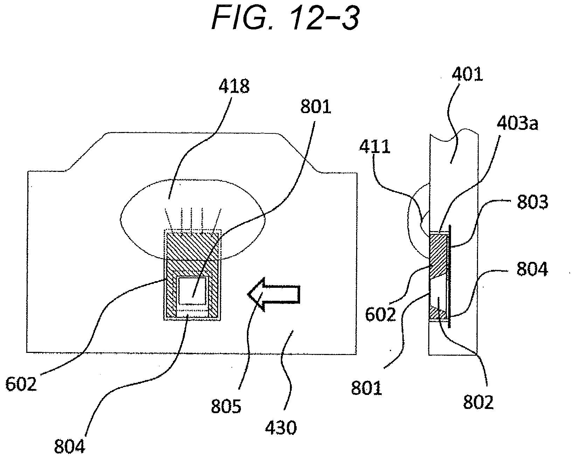

[FIG. 12-3] FIG. 12-3 is a diagram for describing another embodiment of the external view of the protruding portion of the circuit board.

### Description of Embodiments

A mode for carrying out the invention (hereinafter, an embodiment) to be described later solves various problems desired to be solved as an actual product, and particularly solves various types of problems desired for the use as a detection device which detects a physical quantity of intake air of a vehicle, and achieves various effects. One of the various problems to be solved by the following embodiment corresponds to the content that has been described in the above-described section of Technical Problem. In addition, one of the various effects to be achieved by the following embodiment corresponds to the effect described in the above-described section of Advantageous Effects of Invention. The various problems to be solved by the following embodiment and the various effects to be achieved by the following embodiment will be described in the description of the following embodiment. Accordingly, problems and the advantages to be solved and achieved by the following embodiment other than the content in the section of Technical Problem and the content in the section of Advantageous Effects of Invention will also be described in the following embodiment.

In the following embodiment, the same reference signs represent the same configurations even among different drawings, and achieve the same effects. There is also a case in which only a reference sign is given to a configuration that has already been described in a drawing and a description thereof is omitted.

### 1. An embodiment in which an air flow rate detection device according to the present invention is used in an internal combustion engine control system

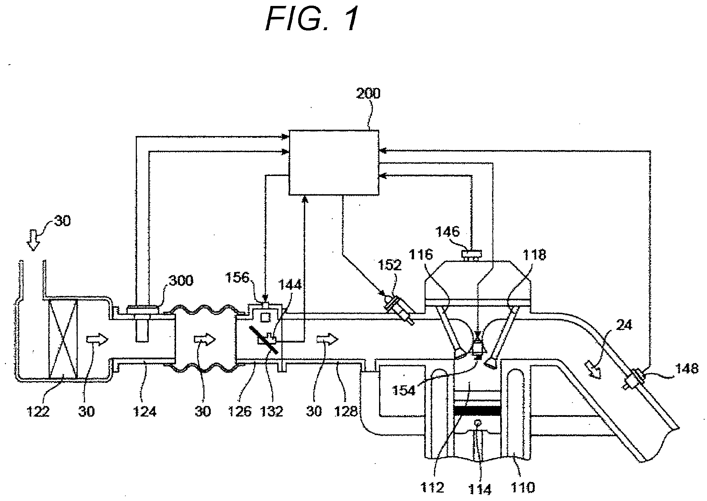

FIG. 1 is a system diagram illustrating the embodiment in which the air flow rate detection device according to the present invention is used in an electronic fuel injection-type internal combustion engine control system. Intake air is sucked from an air cleaner 122 as a gas 30 to be measured based on an operation of an internal combustion engine 110, which includes an engine cylinder 112 and an engine piston 114, and is guided to a combustion chamber of the engine cylinder 112 via, for example, an intake body as a main passage 124, a throttle body 126, and an intake manifold 128. A physical quantity of the gas 30 to be measured, which is the intake air guided to the combustion chamber, is detected by an air flow rate detection device 300 according to the present invention. Fuel is supplied by a fuel injection valve 152 based on the detected physical quantity, and is guided to the combustion chamber in the state as an air-fuel mixture with the intake air 20. Incidentally, the fuel injection valve 152 is provided at an intake port of the internal combustion engine in the present embodiment, and the fuel injected to the intake port molds the air-fuel mixture together with the gas 30 to be measured as the intake air. The air-fuel mixture is guided to the combustion chamber via an intake valve 116 and is burnt to generate mechanical energy.

The fuel and air guided to the combustion chamber form a mixed state of the fuel and the air, and is explosively burnt by spark ignition of a spark plug 154, thereby generating the mechanical energy. After burning, the gas is guided into an exhaust pipe from the exhaust valve 118, and is discharged, as an exhaust gas 24, outside a car from the exhaust pipe. A flow rate of the gas 30 to be measured as the intake air guided to the combustion chamber is controlled by a throttle valve 132 whose opening degree is changed based on an operation of an accelerator pedal. A supply amount of fuel is controlled based on the flow rate of the intake air guided to the combustion chamber, and a driver can control the mechanical energy generated by the internal combustion engine by controlling the opening degree of the throttle valve 132 and controlling the flow rate of the intake air guided to the combustion chamber.

### 1.1 Overview of Control of Internal Combustion Engine Control System

The physical quantity, such as the flow rate, temperature, humidity, and pressure, of the gas 30 to be measured, which is the intake air taken from the air cleaner 122 and flowing in the main passage 124, is detected by the air flow rate detection device 300, and an electric signal indicating the physical quantity of the intake air is input to a control device 200 from the air flow rate detection device 300. In addition, output of a throttle angle sensor 144, which measures the opening degree of the throttle valve 132, is input to the control device 200. Further, output of a rotation angle sensor 146 is input to the control device 200 in order to measure a position or a state of the engine piston 114, the intake valve 116, or the exhaust valve 118 of the internal combustion engine, and rotation speed of the internal combustion engine. Output of an oxygen sensor 148 is input to the control device 200 in order to measure a state of a mixing ratio between the amount of fuel and the amount of air based on the state of the exhaust gas 24.

The control device 200 computes a fuel injection amount and an ignition timing based on the physical quantity of the intake air as the output of the air flow rate detection device 300 and the rotation speed of the internal combustion engine measured based on the output of the rotation angle sensor 146. The fuel amount to be supplied from the fuel injection valve 152 and the ignition timing ignited by the spark plug 154 are controlled based on these computation results. Practically, the amount of fuel supply and the ignition timing are finely controlled based on a change state of the temperature or a throttle angle detected by the air flow rate detection device 300, a change state of the engine rotation speed, and a state of an air-fuel ratio measured by the oxygen sensor 148. The control device 200 further controls the amount of air bypassing the throttle valve 132 using an idle air control valve 156 in an idle operation state of the internal combustion engine and controls the rotation speed of the internal combustion engine in the idle operation state.

### 1.2 Importance of Improvement of Detection Accuracy of Air Flow Rate Detection Device and Equipment Environment of Air Flow Rate Detection Device

Both the fuel supply amount and the ignition timing, which are major control variables of the internal combustion engine, are computed using the output of the air flow rate detection device 300 as the main parameter. Accordingly, improvement of detection accuracy of the air flow rate detection device 300, suppression of a change over time, and improvement of reliability are important in regard to improvement of control accuracy of a vehicle and securing of the reliability.

In particular, recently, a request for fuel saving of vehicles has extremely increased, and further, a request for purification of an exhaust gas has extremely increased. In order to respond to such requests, it is very important to improve the detection accuracy of the physical quantity of the intake air 20 which is detected by the air flow rate detection device 300. In addition, it is also important for the air flow rate detection device 300 to maintain high reliability.

A vehicle to which the air flow rate detection device 300 is equipped is used under environment where a change in temperature or humidity is great. It is desirable that the air flow rate detection device 300 be configured on consideration of response to such a change in temperature or humidity in the use environment and response to dust, pollutants and the like.

In addition, the air flow rate detection device 300 is mounted to the intake pipe which is affected by heat generated from the internal combustion engine. Thus, the heat generated from the internal combustion engine is transferred to the air flow rate detection device 300 via the intake pipe serving as the main passage 124. The air flow rate detection device 300 detects the flow rate of the gas to be measured by performing the heat transfer with the gas to be measured, and thus, it is important to suppress influence of heat from the outside.

The air flow rate detection device 300 equipped in the car, as will be described later, not only solves the problem described in the section of Technical Problem and achieves the effects described in the section of Advantageous Effects of Invention but also solves various problems and achieves various effects which are required as the product on sufficient consideration of the above-described various problems as will be described later. Specific problems to be solved and specific effects to be achieved by the air flow rate detection device 300 will be described in the following description of the embodiment.

### 2. Configuration of Air Flow Rate Detection Device 300

### 2.1 External Structure of Air Flow Rate Detection Device 300

FIGS. 2-1 to 2-6 are diagrams illustrating appearance of the air flow rate detection device 300. FIG. 2-1 is a front view of the air flow rate detection device 300, FIG. 2-2 is a back view thereof, FIG. 2-3 is a left side view thereof, FIG. 2-4 is a right side view thereof, FIG. 2-5 is a plan view thereof, and FIG. 2-6 is a bottom view thereof.

The air flow rate detection device 300 includes a housing 302, a front cover 303, and a rear cover 304. The housing 302 is configured by molding a synthetic resin material using a mold, and includes a flange 311 configured to fix the air flow rate detection device 300 to the intake body as the main passage 124, an external connection portion 321 configured to protrude from the flange 311 and perform electrical connection with an external device, and a measurement unit 331 which extends to protrude from the flange 311 toward the center of the main passage 124.

A circuit board 400 is provided to be integrated with the measurement unit 331 by insert-molding at the time of molding the housing 302 using the mold (see FIGS. 3-1 and 3-2). The circuit board 400 is provided with at least one detection unit, configured to detect the physical quantity of the gas 30 to be measured flowing in the main passage 124 and a circuit unit configured to process a signal detected by the detection unit. The detection unit is arranged at a position to be exposed to the gas 30 to be measured, and the circuit unit is arranged in a circuit chamber sealed by the front cover 303.

An auxiliary passage groove is provided on a front surface and a rear surface of the measurement unit 331, and a first auxiliary passage 305 is formed through collaboration of the front cover 303 and the rear cover 304. A first auxiliary passage inlet 305a, configured to cause a part of the gas 30 to be measured, such as the intake air, to be taken into the first auxiliary passage 305, and a first auxiliary passage outlet 305b, configured to cause the gas 30 to be measured to return to the main passage 124 from the first auxiliary passage 305, are provided at a distal end of the measurement unit 331. A part of the circuit board 400 protrudes in the middle of the first auxiliary passage 305, and a flow rate detection unit 602 (see FIG. 3-1) as the detection unit is arranged at the corresponding protruding portion so as to detect the flow rate of the gas 30 to be measured.

A second auxiliary passage 306, configured to cause a part of the gas 30 to be measured, such as the intake air, to be taken into a sensor chamber Rs, is provided at a middle portion of the measurement unit 331 closer to the flange 311 than the first auxiliary passage 305. The second auxiliary passage 306 is formed through collaboration of the measurement unit 331 and the rear cover 304. The second auxiliary passage 306 includes a second auxiliary passage inlet 306a, opened at an upstream outer wall 336 to take the gas 30 to be measured, and a second auxiliary passage outlet 306b opened at a downstream outer wall 338 to cause the gas 30 to be measured to return to the main passage 124 from the second auxiliary passage 306. The second auxiliary passage 306 communicates with the sensor chamber Rs formed on a back surface of the measurement unit 331. A pressure sensor and a humidity sensor, which are the detection units provided on the rear surface of the circuit board 400, are arranged in the sensor chamber Rs.

### 2.2 Effect Based on External Structure of Air Flow Rate Detection Device 300

In the air flow rate detection device 300, the second auxiliary passage inlet 306a is provided at the middle portion of the measurement unit 331 extending toward the center of the main passage 124 from the flange 311, and the first auxiliary passage inlet 305a is provided at the distal end of the measurement unit 331. Accordingly, it is possible to take a gas, which is not in the vicinity of the inner wall surface of the main passage 124 but in a portion close to a central portion separated from the inner wall surface, into the first auxiliary passage 305 and the second auxiliary passage 306. Accordingly, the air flow rate detection device 300 can measure the physical quantity of the gas in the portion separated from the inner wall surface of the main passage 124 and reduce an error in the measurement of the physical quantity caused by heat or a decrease in flow speed in the vicinity of the inner wall surface.

The measurement unit 331 forms a shape extending long along an axis toward the center from an outer wall of the main passage 124, and a width is formed to be narrow as illustrated in FIGS. 2-3 and 2-4. That is, the measurement unit 331 of the air flow rate detection device 300 forms the shape in which a width of a side surface is thin and a front surface has a substantially rectangular shape. Accordingly, the air flow rate detection device 300 can include the first auxiliary passage 305 having a sufficient length, and can suppress a fluid resistance to a small value with respect to the gas 30 to be measured. Thus, the air flow rate detection device 300 can measure the flow rate of the gas 30 to be measured with high accuracy while suppressing the fluid resistance to the small value.

### 2.5 Structure and Effect of Flange 311

The flange 311 is provided with a plurality of dents 313 on a lower surface 312 opposing the main passage 124 to reduce a heat transfer surface with respect to the main passage 124, and make the air flow rate detection device 300 hardly be affected by heat. The measurement unit 331 is inserted inside the air flow rate detection device 300 through a mounting hole provided in the main passage 124, and the lower surface 312 of the flange 311 opposes the main passage 124. The main passage 124 is, for example, the intake body, and the main passage 124 is maintained at high temperature in many cases. Conversely, it is considered that the main passage 124 is maintained at extremely low temperature at the time of being started in a cold area. The measurement accuracy decreases if such a high-temperature or low-temperature state of the main passage 124 gives influence to measurement of various types of physical quantities. The flange 311 includes the dent 313 on the lower surface 312, and a space is formed between the lower surface 312 opposing the main passage 124 and the main passage 124. Accordingly, it is possible to reduce the heat transfer from the main passage 124 to the air flow rate detection device 300, and prevent the decrease of measurement accuracy caused by heat.

Screw holes 314 of the flange 311 are configured to fix the air flow rate detection device 300 to the main passage 124, and a space is formed between a surface opposing the main passage 124 around each of the screw holes 314 and the main passage 124 such that the surface opposing the main passage 124 around each of the screw holes 314 is away the main passage 124. In this manner, the structure capable of reducing the heat transfer from the main passage 124 to the air flow rate detection device 300 and preventing the decrease of measurement accuracy caused by heat is provided.

### 2.6 Structure of External Connection Portion 321

The external connection portion 321 is provided on an upper surface of the flange 311 and includes a connector 322 which protrudes from the flange 311 toward a downstream side in the flow direction of the gas 30 to be measured. The connector 322 is provided with an insertion hole 322a configured to allow a communication cable for connection with the control device 200 to be inserted therethrough. Four external terminals 323 are provided inside the insertion hole 322a as illustrated in FIG. 2-4. The external terminals 323 serve as a terminal to output information on the physical quantity as the measurement result of the air flow rate detection device 300 and a power supply terminal to supply DC power for the operation of the air flow rate detection device 300.

The connector 322 has a shape of protruding from the flange 311 toward the downstream side in the flow direction of the gas 30 to be measured and being inserted toward an upstream side from the downstream side in the flow direction, but is not limited to this shape, and may have a shape, for example, of vertically protruding from the upper surface of the flange 311 and being inserted in the extension direction of the measurement unit 331, and various modifications thereof can be made.

### 3. Overall Structure of Housing 302 and Effect Thereof

Next, the overall structure of the housing 302 will be described with reference to FIGS. 3-1 to 3-4 FIGS. 3-1 to 3-4 are diagrams illustrating a state of the housing 302 in which the front cover 303 and the rear cover 304 are removed from the air flow rate detection device 300. FIG. 3-1 is a front view of the housing 302, FIG. 3-2 is a back view of the housing 302, FIG. 3-3 is a right side view of the housing 302, FIG. 3-4 is a left side view of the housing 302.

The housing 302 has a structure in which the measurement unit 331 extends from the flange 311 toward the center of the main passage 124. The circuit board 400 is insert-molded on a proximal end side of the measurement unit 331. The circuit board 400 is arranged to be parallel with a surface of the measurement unit 331 at an intermediate position between the front surface and the rear surface of the measurement unit 331, and is molded to be integrated with the housing 302, thereby partitioning the proximal end of the measurement unit 331 between one side and the other side in the thickness direction.

A circuit chamber Rc housing the circuit unit of the circuit board 400 is formed on the front surface of the measurement unit 331, and the sensor chamber Rs housing the pressure sensor 421 and the humidity sensor 422 is formed on the rear surface thereof. The circuit chamber Rc is sealed by attaching the front cover 303 to the housing 302, and is completely isolated from the outside. On the other hand, the second auxiliary passage 306 and the sensor chamber Rs, which is an interior space communicating with the outside of the measurement unit 331 via the second auxiliary passage 306, are formed by attaching the rear cover 304 to the housing 302. A part of the circuit board 400 protrudes inside the first auxiliary passage 305 from a partition wall 335 that partitions the circuit chamber Rc of the measurement unit 331 and the first auxiliary passage 305, and the flow rate detection unit 602 is provided on a flow path surface 430 for measurement in this protruding portion.

### 3.2 Structure of Auxiliary Passage Groove

Auxiliary passage grooves configured to form the first auxiliary passage 305 are provided at a distal end side of the measurement unit 331 in a length direction. The auxiliary passage grooves configured to form the first auxiliary passage 305 include a front auxiliary passage groove 332 illustrated in FIG. 3-1 and a rear auxiliary passage groove 334 illustrated in FIG. 3-2. As illustrated in FIG. 3-1, the front auxiliary passage groove 332 is gradually curved toward the flange 311 on the proximal end of measurement unit 331 as proceeding from the first auxiliary passage outlet 305b opened at the downstream outer wall 338 of the measurement unit 331 toward the upstream outer wall 336, and communicates with an opening portion 333, which penetrates through the measurement unit 331 in the thickness direction, at a position near the upstream outer wall 336. The opening portion 333 is formed along the main passage 124 in the flow direction of the gas 30 to be measured so as to extend over a portion between the upstream outer wall 336 and the downstream outer wall 338.

As illustrated in FIG. 3-2, the rear auxiliary passage groove 334 progresses from the upstream outer wall 336 toward the downstream outer wall 338 and is divided into two branches at an intermediate position between the upstream outer wall 336 and the downstream outer wall 338 such that one branch extends in a straight line directly as a discharge passage and is opened at an outlet 305c of the downstream outer wall 338, and the other branch is gradually curved toward the flange 311 on the proximal end of the measurement unit 331 as progressing toward the downstream outer wall 338 and communicates with the opening portion 333 at the position near the downstream outer wall 338.

The rear auxiliary passage groove 334 forms an inlet groove through which the gas 30 to be measured flows from the main passage 124, and the front auxiliary passage groove 332 forms an outlet groove which causes the gas 30 to be measured taken from the rear auxiliary passage groove 334 to return to the main passage 124. The front auxiliary passage groove 332 and the rear auxiliary passage groove 334 are provided at a distal end of the housing 302, and thus, can take a gas in a portion separated from the inner wall surface of the main passage 124, in other words, a gas flowing in a portion close to a central portion of the main passage 124 as the gas 30 to be measured. The gas flowing in the vicinity of the inner wall surface of the main passage 124 receives influence of temperature of a side surface of the main passage 124, and often has temperature different from an average temperature of a gas such as the intake air 20 that flows in the main passage 124. In addition, the gas flowing in the vicinity of the inner wall surface of the main passage 124 flows at speed lower than average flow speed of the gas flowing in the main passage 124 in many cases. Such influence is hardly received in the air flow rate detection device 300 according to the embodiment, and thus, it is possible to suppress the decrease of the measurement accuracy.

As illustrated in FIG. 3-2, a part of the gas 30 to be measured flowing in the main passage 124 is taken into the rear auxiliary passage groove 334 from the first auxiliary passage inlet 305a, and flows inside the rear auxiliary passage groove 334. Further, a substance with a large mass contained in the gas 30 to be measured directly flows into the discharge passage extending in the straight line along with the part of the gas to be measured from the branch, and is discharged to the main passage 124 through the outlet 305c of the downstream outer wall 338.

The rear auxiliary passage groove 334 has a shape of deepening in a progressing direction, and the gas 30 to be measured gradually moves to the front side of the measurement unit 331 as flowing along the rear auxiliary passage groove 334. In particular, the rear auxiliary passage groove 334 is provided with an abruptly inclined portion 334a which is abruptly deepened in front of the opening portion 333, and a part of air with a small mass moves along the abruptly inclined portion 334a and flows on the measurement flow path surface 430 of the circuit board 400 inside the opening portion 333. On the other hand, the substance with a large mass flows on a rear surface 431 of the measurement flow path surface since an abrupt route change thereof is difficult.

As illustrated in FIG. 3-1, the gas 30 to be measured moving to the front side at the opening portion 333 flows along the measurement flow path surface 430 of the circuit board so that heat transfer with the flow rate detection unit 602, provided on the measurement flow path surface 430, is performed, thereby measuring the flow rate. The air flowing into the front auxiliary passage groove 332 from the opening portion 333 flows along the front auxiliary passage groove 332 together with the gas, and is discharged to the main passage 124 through the first auxiliary passage outlet 305b opened at the downstream outer wall 338.

The substance with a large mass, such as dirt, mixed in the gas 30 to be measured has a large inertial force, and thus, hardly changes its route in an abrupt manner in a depth direction of the groove along the front surface of a portion of the abruptly inclined portion 334a at which a depth of the groove is abruptly deepened. Thus, the substance with a large mass moves on a side of the measurement flow path surface rear surface 431, and thus, it is possible to prevent the substance from passing the portion close to the flow rate detection unit 602. In the embodiment, it is configured such that most of the substances with a large mass except for the gas pass through the measurement flow path surface rear surface 431, which is a back surface of the measurement flow path surface 430. Thus, it is possible to reduce influence of contamination caused by the substance such as oil content, carbon and dirt, and to suppress the decrease of the measurement accuracy. That is, the shape is formed such that the route of the gas 30 to be measured is abruptly changed along an axis crossing an axis of flow of the main passage 124, and thus, it is possible to reduce the influence of the substance mixed in the gas 30 to be measured.

### 3.3 Structure and Effect of Second Auxiliary Passage and Sensor Chamber

The second auxiliary passage 306 is formed in a straight line over a portion between the second auxiliary passage inlet 306a and the second auxiliary passage outlet 306b to be parallel with the flange 311 in the flow direction of the gas 30 to be measured. The second auxiliary passage inlet 306a is formed by cutting out a part of the upstream outer wall 336, and the second auxiliary passage outlet 306b is formed by cutting out a part of the downstream outer wall 338. To be specific, the second auxiliary passage inlet 306a and the second auxiliary passage outlet 306b are formed by cutting a part of the upstream outer wall 336 and a part of the downstream outer wall 338, respectively, from a rear surface side of the measurement unit 331 at a position continuously along an upper surface of the partition wall 335 as illustrated in FIG. 3-3. The second auxiliary passage inlet 306a and the second auxiliary passage outlet 306b are cut out up to a depth position to be flush with the rear surface of the circuit board 400. The gas 30 to be measured passes along a rear surface of a substrate main body 401 of the circuit board 400, and thus, the second auxiliary passage 306 functions as a cooling channel which cools the substrate main body 401. The circuit board 400 has heat in many cases, such as an LSI and a microcomputer, and it is possible to transfer such heat to the rear surface of the substrate main body 401, and to discharge the heat using the gas 30 to be measured passing through the second auxiliary passage 306.

The sensor chamber Rs is provided closer to the proximal end of the measurement unit 331 than the second auxiliary passage 306. A part of the gas 30 to be measured flowing into the second auxiliary passage 306 from the second auxiliary passage inlet 306a flow into the sensor chamber Rs, and pressure and relative humidity are detected by the pressure sensor 421 and the humidity sensor 422, respectively, inside the sensor chamber Rs. Since the sensor chamber Rs is arranged closer to the proximal end of the measurement unit 331 than the second auxiliary passage 306, it is possible to reduce influence of dynamic pressure on the gas 30 to be measured passing through the second auxiliary passage 306. Accordingly, it is possible to improve the detection accuracy of the pressure sensor 421 inside the sensor chamber Rs.

Further, since the sensor chamber Rs is arranged closer to the proximal end of the measurement unit 331 than the second auxiliary passage 306, it is possible to prevent contaminants or water drops flowing into the second auxiliary passage 306 together with the gas 30 to be measured from adhering on the pressure sensor 421 and the humidity sensor 422 arranged at the downstream side thereof when the distal end of the measurement unit 331 is attached to an intake passage in an attitude state of facing downward, for example.

In particular, the pressure sensor 421 having a relatively larger outer shape is arranged at the upstream side, and the humidity sensor 422 having a relatively smaller outer shape is arranged at the downstream side of the pressure sensor 421 inside the sensor chamber Rs in the present embodiment. Thus, the contaminants or water drops that have flowed together with the gas 30 to be measured adhere on the pressure sensor 421, and the adhesion on the humidity sensor 422 thereof is suppressed. Accordingly, it is possible to secure the humidity sensor 422 with a low resistance with respect to the contaminants or water drops.

The pressure sensor 421 and the humidity sensor 422 are hardly affected by the flow of the gas 30 to be measured as compared to the flow rate detection unit 602. In particular, the humidity sensor 422 may be secured just to a level of diffusing moisture in the gas 30 to be measured, and thus, can be provided in the sensor chamber Rs which is adjacent to the linear second auxiliary passage 306. On the contrary, the flow rate detection unit 602 requires a certain level of flow speed or higher, and further, needs to be kept away from dust or contaminants, and be configured on consideration of influence with respect to pulsation. Accordingly, the flow rate detection unit 602 is provided in the first auxiliary passage 305 which has a shape of circling in a loop shape.

FIGS. 4-1 and 4-2 are diagrams illustrating another mode of the second auxiliary passage.

In this mode, the second auxiliary passage inlet 306a and the second auxiliary passage outlet 306b are formed by providing through-holes 337 in the upstream outer wall 336 and the downstream outer wall 338 instead of cutting out the upstream outer wall 336 and the downstream outer wall 338 When the second auxiliary passage inlet 306a and the second auxiliary passage outlet 306b are formed by cutting out the upstream outer wall 336 and the downstream outer wall 338, respectively, as in the second auxiliary passage illustrated in FIGS. 3-2 to 3-4 described above, a width of the upstream outer wall 336 and a width of the downstream outer wall 338 are set to be locally narrow at the corresponding positions. Thus, there is a risk that the measurement unit 331 may be distorted in substantially a dogleg shape from the notch as a starting point due to heat sink and the like at the time of molding. The through-hole is provided instead of the notch according to this mode, it is possible to prevent the measurement unit 331 from being folded in substantially a dogleg shape. Accordingly, it is possible to prevent the detection accuracy from being affected by a change of a position or a direction of the detection unit with respect to the gas 30 to be measured due to the distortion in the housing 302, and to constantly secure the certain detection accuracy without individual differences.

FIGS. 8-1, 8-2, and 8-3 are diagrams illustrating another mode of the second auxiliary passage.

A partition wall to partition the second auxiliary passage 306 and the sensor chamber Rs may be provided in the rear cover 304. According to such a configuration, it is possible to cause the gas 30 to be measured to indirectly flow into the sensor chamber Rs from the second auxiliary passage 306, and to suppress the adhesion of contaminants or water drops to the humidity sensor by reducing the influence of the dynamic pressure with respect to the pressure sensor.

In the example illustrated in FIG. 8-1, two pressure sensors 421A and 421B are provided in the sensor chamber Rs to be side by side in a line along the second auxiliary passage 306, and the single humidity sensor 422 is provided at a downstream side thereof. Partition walls 352A and 352B are provided in the rear cover 304, and is arranged to extend between the second auxiliary passage 306 and the sensor chamber Rs by attaching the rear cover 304 to the housing 302. To be specific, the partition wall 352A is arranged between the pressure sensor on an upstream side and an upstream wall of the sensor chamber Rs, and the partition wall 352B is arranged along the humidity sensor over a portion between the pressure sensor on the downstream side and a downstream wall of the sensor chamber Rs.

The example illustrated in FIG. 8-2 illustrates the specification including only the pressure sensor 421B on the downstream side, and the pressure sensor 421A on the upstream side is omitted therein, and thus, the partition wall 352C is illustrated to be long. The partition wall 352D on the downstream side is arranged along the humidity sensor over a portion between the pressure sensor on the downstream side and the downstream wall of the sensor chamber Rs, similarly to the partition wall 352B in FIG. 8-1. Accordingly, the partition walls 352A and 352C can prevent the gas 30 to be measured from directly contacting the pressure sensor and reduce the influence of the dynamic pressure. In addition, the partition walls 352B and 352D can suppress adhesion of contaminants or water drops to the humidity sensor.

The example illustrated in FIG. 8-3 illustrates the specification in which both the two pressure sensors 421A and 421B are omitted, and only the single humidity sensor 422 is provided in the sensor chamber Rs. The partition wall 352E on the upstream side extends to an upstream position of the humidity sensor from the upstream wall of the sensor chamber Rs along the portion between the second auxiliary passage 306 and the sensor chamber Rs, and has substantially an L shape of being folded at the downstream end and opposing the upstream side of the humidity sensor. The partition wall 352F is arranged along the humidity sensor over the portion between the pressure sensor on the downstream side and the downstream wall of the sensor chamber Rs, similarly to the partition walls 352B and 352D. Accordingly, the partition wall 352E can prevent contaminants or water drops, contained in the gas 30 to be measured passing through the second auxiliary passage 306, from moving toward the humidity sensor and can secure the humidity sensor from such contaminants and the like.

### 3.4 Shape and Effect of Front Cover 303 and Rear Cover 304

FIGS. 5(a) and 5(b) are diagrams illustrating appearance of the front cover 303. FIG. 5(a) is a front view, and FIG. 5(b) is a cross-sectional view taken along a line B-B of FIG. 5 (a). FIGS. 6(a) and 6(b) are diagrams illustrating appearance of the rear cover 304. FIG. 6(a) is a front view, and FIG. 6(b) is a cross-sectional view taken along a line B-B of FIG. 6(a).

In FIGS. 5(a) to 6(b), the front cover 303 and the rear cover 304 create the first auxiliary passage 305 by blocking the front auxiliary passage groove 332 and the rear auxiliary passage 334 of the housing 302. In addition, the front cover 303 creates the sealed circuit chamber Rc, and the rear cover 304 creates the second auxiliary passage 306 and the sensor chamber Rs communicating with the second auxiliary passage 306 by blocking a concave portion on the rear surface side of the measurement unit 331.

The front cover 303 is provided with a protruding portion 356 at a position opposing the flow rate detection unit 602, and is used for creation of an aperture against the measurement flow path surface 430. Thus, it is desirable that molding accuracy be high. The front cover 303 and the rear cover 304 are created by a resin molding process of injecting thermoplastic resin into a mold, and thus, can be created with high molding accuracy.

The front cover 303 and the rear cover 304 are provided with a plurality of fixing holes 351 into which a plurality of fixing pins 350 protruding from the measurement unit 331 are inserted, respectively. The front cover 303 and the rear cover 304 are attached to the front surface and the rear surface of the measurement unit 331, respectively. At this time, the fixing pin 350 is inserted into the fixing hole 351 and positioning thereof is performed. Further, the front auxiliary passage groove 332 and the rear auxiliary passage groove 334 are bonded to each other along each edge by laser welding and the like, and the circuit chamber Rc and the sensor chamber Rs are bonded to each other along each edge by laser welding and the like.

### 3.5 Fixing Structure and Effect According to Housing 302 of Circuit Board 400

Next, fixing according to the resin molding process of the circuit board 400 into the housing 302 will be described. The circuit board 400 is molded to be integrated with the housing 302 such that the flow rate detection unit 602 of the circuit board 400 is arranged at a predetermined location of the auxiliary passage groove forming the auxiliary passage, for example, the opening portion 333 which is a connecting portion between the front auxiliary passage groove 332 and the rear auxiliary passage groove 334 in the present embodiment.

In the measurement unit 331 of the housing 302, portions which embed an outer circumferential edge of a base portion 402 of the circuit board 400 by resin molding to be fixed to the housing 302 are provided as fixing portions 372 and 373. The fixing portions 372 and 373 fix the outer circumferential edge of the base portion 402 of the circuit board 400 by sandwiching the both between a front side and a rear side thereof.

The housing 302 is manufactured by the resin molding process. In this resin molding process, the circuit board 400 is built in the resin of the housing 302 and is fixed inside the housing 302 by resin molding. In this manner, it is possible to maintain the auxiliary passage to allow the flow rate detection unit 602 to perform heat transfer with respect to the gas 30 to be measured to measure the flow rate, for example, a positional relationship, a directional relationship, or the like, the relationship with the shape of the front auxiliary passage groove 332 or the rear auxiliary passage groove 334 with extremely high accuracy, and it is possible to suppress an error or a variation generated for each of the circuit boards 400 to an extremely small value. As a result, it is possible to significantly improve the measurement accuracy of the circuit board 400. For example, it is possible to dramatically improve the measurement accuracy as compared to a fixing method of the related art using an adhesive.

The air flow rate detection device 300 is often produced by mass-production, and there is a limit in the method of performing adhesion using the adhesive while performing thorough measurement in terms of the improvement of measurement accuracy. However, it is possible to significantly reduce the variation in measurement accuracy and to significantly improve the measurement accuracy of each of the air flow rate detection devices 300 by molding the auxiliary passage through the resin molding process of molding the auxiliary passage in which the gas 30 to be measured flows and fixing the circuit board 400 at the same time as in the present embodiment.

When a description is further given with reference to the embodiment illustrated in, for example, FIGS. 3-1 to 3-4, the circuit board 400 can be fixed to the housing 302 with high accuracy such that a relationship among the front auxiliary passage groove 332, the rear auxiliary passage groove 334, and the flow rate detection unit 602 becomes a defined relationship. In the air flow rate detection device 300 mass-produced in this manner, it is possible to regularly obtain the positional relationship between the flow rate detection unit 602 of each of the circuit boards 400 and the first auxiliary passage 305 or the relationship between the shapes thereof with extremely high accuracy.

In regard to the first auxiliary passage 305 to which the flow rate detection unit 602 of the circuit board 400 is fixed, work of molding the first auxiliary passage 305 using these auxiliary passage grooves 332 and 334 corresponds work of covering both the surfaces of the housing 302 using the front cover 303 and the rear cover 304 since the front auxiliary passage groove 332 and the rear auxiliary passage groove 334 can be molded with extremely high accuracy, for example. This work requires a work process which is very simple and has few factors that cause deterioration in measurement accuracy. In addition, the front cover 303 and the rear cover 304 are produced in a process using resin molding with high molding accuracy. Accordingly, it is possible to complete the auxiliary passage provided to have the defined relationship with the flow rate detection unit 602 of the circuit board 400 with high the accuracy. According to this method, it is possible to obtain high productivity in addition to the improvement of measurement accuracy.

On the contrary, a thermal flow meter is produced in the related art by manufacturing an auxiliary passage, and then, attaching a measurement unit to the auxiliary passage using an adhesive. In such a method of using the adhesive, a variation in thickness of the adhesive is great and an adhesion position and an adhesion angle vary for each product. Thus, there is a limit in the improvement of measurement accuracy. Further, when these kinds of work are performed in the mass-production process, the improvement of measurement accuracy becomes very difficult.

In the embodiment according to the present invention, the circuit board 400 is fixed by the resin molding and the auxiliary passage groove for molding of the first auxiliary passage 305 is molded by the resin molding at the same time. In this manner, it is possible to fix the shape of the auxiliary passage groove and to fix the flow rate detection unit 602 to the auxiliary passage groove with extremely high accuracy.

Portions relating to measurement of the flow rate, for example, the flow rate detection unit 602 and the measurement flow path surface 430 to which the flow rate detection unit 602 is attached are provided on the front surface of the circuit board 400. The flow rate detection unit 602 and the measurement flow path surface 430 are exposed from the resin molding the housing 302. That is, the flow rate detection unit 602 and the measurement flow path surface 430 are configured not to be covered by the resin that molds the housing 302. The flow rate detection unit 602 of the circuit board 400 and the measurement flow path surface 430 are also used after the resin molding of the housing 302, without any change, for the flow rate measurement of the air flow rate detection device 300. In this manner, the measurement accuracy is improved.

In the embodiment according to the present invention, the circuit board 400 is fixed to the housing 302 including the first auxiliary passage 305 by molding the circuit board 400 to be integrated with the housing 302, and thus, it is possible to reliably fix the circuit board 400 to the housing 302. In particular, the structure in which the protruding portion 403 of the circuit board 400 penetrates through the partition wall 335 to protrude toward the first auxiliary passage 305 is given, and thus, the sealability between the first auxiliary passage 305 and the circuit chamber Rc is high. Further, it is possible to prevent the gas 30 to be measured from being leaked into the circuit chamber Rc from the first auxiliary passage 305, and to prevent circuit parts, wiring and the like of the circuit board 400 from contacting the gas 30 to be measured and corroding.

### 3.6 Structure and Effect of terminal-connecting portion 320

Next, a structure of a terminal-connecting portion will be described hereinafter with reference to FIGS. 10-1 to 10-4(b). FIG. 10-1 is a diagram for describing the structure of the terminal-connecting portion, FIG. 10-2 is a diagram for describing the structure of the terminal-connecting portion, FIG. 10-3 is a cross-sectional view taken along a line F-F of FIG. 10-1, and FIGS. 10-4(a) and 10-4(b) are cross-sectional views taken along a line of G-G in FIG. 10-2.

The terminal-connecting portion 320 has a configuration in which an inner end portion 361 of the external terminal 323 and a connection terminal 412 of the circuit board 400 are connected using an aluminum wire or a gold wire 413. As illustrated in FIG. 10-1, the inner end portions 361 of the respective external terminals 323 protrude inside the circuit chamber Rc from the flange 311, and the inner end portions 361 of the respective external terminals 323 are arranged side by side with a predetermined interval interposed therebetween in accordance with a position of the connection terminal 412 of the circuit board 400.

As illustrated in FIG. 10-3, the inner end portion 361 is arranged at a position to be substantially flush with the front surface of the circuit board 400. Further, a distal end of the inner end portion is folded from the front surface of the measurement unit 331 toward the rear surface in a substantially L shape, and protrudes to the rear surface of the measurement unit 331. The distal ends of the inner end portions 361 are linked to each other via a linking portion 365 as illustrated in FIG. 10-4(a), and are divided individually by cutting the linking portion 365 away after molding as illustrated in FIG. 10-4(b).

The respective inner end portions 361 are fixed to the housing 302 by resin molding in a molding process such that the inner end portions 361 and the circuit board 400 are arranged on the same plane. The respective inner end portions 361 are fixed to the housing 302 by the resin molding process in a state of being linked and integrated with each other via the linking portion 365 in order to prevent deformation or deviation in arrangement. Further, after being fixed to the housing 302, the linking portion 365 is cut away.

The inner end portion 361 is resin-molded in the state of being sandwiched from the front surface and the rear surface of the measurement unit 331. At this time, the mold abuts on a front surface of the inner end portion 361 over the entire surface, and the fixing pin abuts on the rear surface of the inner end portion 361. Accordingly, the front surface of the inner end portion 361 to which the aluminum wire or the gold wire is welded can be completely exposed without being covered by mold resin due to leakage of resin, and the welding of the gold wire can be easily performed. Incidentally, a pin hole 340 of a mark obtained when the inner end portion 361 is pressed by the fixing pin is formed in the measurement unit 331.

The distal end of the inner end portion 361 protrudes inside the concave portion 341 formed in the rear surface of the measurement unit 331. The concave portion 341 is covered by the rear cover 304, and the perimeter of the concave portion 341 is boded continuously to the rear cover 304 by laser welding and the like, thereby forming the sealed interior space. Accordingly, it is possible to prevent the inner end portion 361 from contacting the gas 30 to be measured and corroding.

### 3.7 Fixing Structure of Flow Rate Detection Unit 602 to Substrate Main Body 401 and Effect

FIGS. 12-1 to 12-3 illustrate external views of the protruding portion 403 of the circuit board 400. First, a description will be given regarding an embodiment of fixing the flow rate detection unit 602 to the substrate main body 401 with reference to FIG. 12-1.

The flow rate detection unit 602 includes a heat generation control bridge configured to control the amount of heat generated by a heat-generating body and a flow rate detection bridge configured to measure a flow rate. A resistor forming a bridge circuit is formed on a diaphragm 801.

Here, the flow rate detection unit 602 adheres to the substrate main body 401 of 400 of the circuit board by a sheet-like adhesive 803. A notch 804 is partially provided in the sheet-like adhesive 803, and external air communicates through a cavity 802 on a rear surface of the diaphragm. In addition, the sheet-like adhesive 803 has the notch 804, and the notch 804 has a shape opening at a surface parallel with an air flow direction 805. In this manner, the diaphragm rear surface cavity 802 is prevented from being sealed by providing the notch 804 in the sheet-like adhesive 803, and it is possible to suppress deformation of the diaphragm 801 caused by expansion or contraction of the air in the diaphragm rear surface cavity 802. In addition, the notch 804 of the sheet-like adhesive 803 is provided to open at the surface parallel with the air flow 805 and a surface perpendicular thereto is attached using the sheet-like adhesive 803 to be sealed as illustrated in FIG. 12-1, and accordingly, it is possible to prevent the air flow from swirling into the rear surface of the diaphragm 801 from the perpendicular surface.

Next, in an embodiment illustrated in FIG. 12-2, a lower portion of gold wire bonding of the flow rate detection unit 602 is attached using the sheet-like adhesive 803 to open at a surface parallel with the air flow direction 805 such that external air communicates through the diaphragm rear surface cavity 802, using a resin material 806 such as silicone. That is, it is configured such that the resin material 806 is provided on a surface perpendicular to the air flow 805. Accordingly, it is possible to reduce a variation in adhesion height by performing the adhesion using the sheet-like adhesive 803, and to suppress the air from swirling into the rear surface of the diaphragm 801 using the resin material 806 such as silicone.

In an embodiment illustrated in FIG. 12-3, the flow rate detection unit 602 is mounted inside a concave portion 403a provided in the substrate main body 401 of the circuit board 400. It is possible to suppress the flow-in of the air from the notch 804 provided in the sheet-like adhesive 803 by mounting the flow rate detection unit 602 in the concave portion. In addition, the substrate main body 401 is made of glass epoxy resin, and it is possible to form the concave portion 403a by laser processing using a bottom surface of the substrate main body 401 as a conductor layer, and it is possible to suppress a tolerance in size and depth and to suppress the concave portion 403a corner R to a minimum level.

### 4. Appearance of Circuit Board 400

### 4.1 Molding of Measurement Flow Path Surface 430 Provided with Flow Rate Detection Unit 602

FIGS. 7-1 to 7-6 illustrate appearance of the circuit board 400. Incidentally, inclined portions illustrated on the appearance of the circuit board 400 represent a fixing surface 432 and a fixing surface 434 obtained by covering and fixing the circuit board 400 using resin at the time of molding the housing 302 in the resin molding process.

FIG. 7-1 is a front view of the circuit board, FIG. 7-2 is a right side view of the circuit board, FIG. 7-3 is a back view of the circuit board, FIG. 7-4 is a left side view of the circuit board, FIG. 7-5 is a cross-sectional view taken along a line B-B illustrating a cross-section of the LSI part of FIG. 7-1, and FIG. 7-6 is a cross-sectional view taken along a line C-C of the detection unit in FIG. 7-1.

The circuit board 400 includes the substrate main body 401. The circuit unit and the flow rate detection unit 602 serving as a sensing element are provided on the front surface of the substrate main body 401, and the pressure sensor 421 and the humidity sensor 422 serving as sensing elements are provided on the rear surface of the substrate main body 401. The substrate main body 401 is configured using a material made of glass epoxy resin, and has a value approximate to a thermal expansion coefficient of thermoplastic resin with which the housing 302 is molded as compared to a substrate made of a ceramic material. Accordingly, it is possible to reduce stress caused by a difference in thermal expansion coefficient at the time of being insert-molded in the housing 302, and it is possible to decrease distortion of the circuit board 400.

The substrate main body 401 has a flat shape with a constant thickness, and has a substantially T-shape when seen in a plan view including the substantially square-shaped base portion 402 and the substantially square-shaped protruding portion 403 that protrudes from one side of the base portion 402 and is smaller than the base portion 402 by one side. The circuit unit is provided on a front surface of the base portion 402. The circuit unit is configured by mounting electronic parts such as an LSI 414, a microcomputer 415, a power supply regulator 416 and chip parts 417, such as a resistor and a capacitor, on a circuit wiring (not illustrated). The power supply regulator 416 generates a great amount of heat as compared to the other electronic parts, such as the microcomputer 415 and the LSI 414, and thus, is arranged relatively on the upstream side in the circuit chamber Rc. The entire part of the LSI 414 is sealed by a synthetic resin material 419 so as to include a gold wire 411, thereby improving a handling property of the circuit board 400 at the time of insert-molding.

As illustrated in FIG. 7-5, a concave portion 402a to which the LSI 414 is fitted is provided to recess on the front surface of the substrate main body 401. This concave portion 402a can be formed by performing laser processing on the substrate main body 401. The substrate main body 401 made of the glass epoxy resin can be more easily processed than a substrate main body made of ceramic, and accordingly, it is possible to easily provide the concave portion 402. The concave portion 402 has a depth such that a front surface of the LSI 414 is flush with the front surface of the substrate main body 401. When the height of the front surface of the LSI 414 and the height of the front surface of the substrate main body 401 are set to match each other, the wire bonding to connect the LSI 414 and the substrate main body 401 with the gold wire 411 becomes easy, and the manufacturing of the circuit board 400 becomes easy. The LSI 414 can be directly provided on the front surface of the substrate main body 401, for example, as illustrated in FIG. 7-6. In such a structure, the process of forming the concave portion 402 in the substrate main body 401 is unnecessary, and it is possible to simplify the manufacturing although the synthetic resin material 419 with which the LSI 414 is coated protrudes greater.

The protruding portion 403 is arranged inside the first auxiliary passage 305 at the time of insert-molding the circuit board 400 in the housing 302, and the measurement flow path surface 430, which is a front surface of the protruding portion 403, extends along the flow direction of the gas 30 to be measured. The flow rate detection unit 602 is provided on the measurement flow path surface 430 of the protruding portion 403. The flow rate detection unit 602 performs heat transfer with the gas 30 to be measured, measures a state of the gas 30 to be measured, for example, flow speed of the gas 30 to be measured, and outputs an electric signal indicating the flow rate of the gas flowing in the main passage 124. It is desirable that the gas flowing in the vicinity of the measurement flow path surface 430 be laminar flow and have little disorder in order to make the flow rate detection unit 602 measure the state of the gas 30 to be measured with high accuracy. Thus, it is desirable that the front surface of the flow rate detection unit 602 and a surface of the measurement flow path surface 430 be flush with each other, or a difference therebetween is a predetermined value or smaller.

The concave portion 403a is provided to recess in the front surface of the measurement flow path surface 430, and the flow rate detection unit 602 is fitted thereto. The concave portion 403a can be also formed by performing laser processing. The concave portion 403a has a depth such that the front surface of the flow rate detection unit 602 is flush with the front surface of the measurement flow path surface 430. The flow rate detection unit 602 and a wiring portion thereof are coated with a synthetic resin material 418 so as to prevent electric corrosion caused by adhesion of salt water.

The two pressure sensors 421A and 421B, and the one humidity sensor 422 are provided on the rear surface of the substrate main body 401. The two pressure sensors 421A and 421B are arranged in a line to be divided into the upstream side and the downstream side. Further, the humidity sensor 422 is arranged on the downstream side of the pressure sensor 421B. These two pressure sensors 421A and 421B and the one humidity sensor 422 are arranged inside the sensor chamber Rs. Although the case where the two pressure sensors 421A and 421B and the one humidity sensor 422 are provided in the example illustrated in FIG. 7-3, only the pressure sensor 421B and the humidity sensor 422 may be provided as illustrated in FIG. 8-2(a), and further, only the humidity sensor 422 may be provided as illustrated in FIG. 8-3(a).

In the circuit board 400, the second auxiliary passage 306 is arranged on the rear surface side of the substrate main body 401. Accordingly, the entire substrate main body 401 can be cooled by the gas 30 to be measured passing through the second auxiliary passage 306.

### 4.2 Structure of Temperature Detection Unit 451

A temperature detection unit 451 is provided at an upstream end side of the base portion 402 and at a corner on the protruding portion 403 side. The temperature detection unit 451 is configured as one of the detection units for detection of the physical quantity of the gas 30 to be measured flowing in the main passage 124 and is provided in the circuit board 400. The circuit board 400 includes a protruding portion 450, which protrudes toward the upstream of the gas 30 to be measured from the second auxiliary passage inlet 306a of the second auxiliary passage 306, and the temperature detection unit 451 includes a chip-type temperature sensor 453 provided in the protruding portion 450 on the rear surface of the circuit board 400. The temperature sensor 453 and a wiring portion thereof are coated with a synthetic resin material so as to prevent electric corrosion caused by adhesion of salt water.

For example, the upstream outer wall 336 inside the measurement unit 331 forming the housing 302 is dent toward the downstream side at a central portion of the measurement unit 331 where the second auxiliary passage inlet 306a is provided as illustrated in FIG. 3-2, and the protruding portion 450 of the circuit board 400 protrudes toward the upstream side from the dent-shaped upstream outer wall 336. A distal end of the protruding portion 450 is arranged at a position recessing more than a surface of the upstream outer wall 336 on the most upstream side. The temperature detection unit 451 is provided in the protruding portion 450 to face the back surface of the circuit board 400, that is, the second auxiliary passage 306 side.

Since the second auxiliary passage inlet 306a is formed on the downstream side of the temperature detection unit 451, the gas 30 to be measured flowing from the second auxiliary passage inlet 306a into the second auxiliary passage 306 flows into the second auxiliary passage inlet 306a after contacting the temperature detection unit 451, and the temperature thereof is detected at the time of contacting the temperature detection unit 451. The gas 30 to be measured contacting the temperature detection unit 451 directly flows into the second auxiliary passage 306 from the second auxiliary passage inlet 306a, and is discharged from the second auxiliary passage outlet 306b to the main passage 123 passing through the second auxiliary passage 306.

### 4.4 Fixing of Circuit Board 400 Using Resin Molding Process and Effect Thereof

A shaded portion in FIG. 9-1 indicates the fixing surface 432 and the fixing surface 434 configured to cover the circuit board 400 with thermoplastic resin used in the resin molding process in order to fix the circuit board 400 to the housing 302 during the resin molding process. It is important to maintain the relationship between the measurement flow path surface 430 and the flow rate detection unit 602 provided in the measurement flow path surface 430, and the shape of the auxiliary passage to be the defined relationship with high accuracy.

Since the circuit board 400 is fixed to the housing 302 forming the auxiliary passage at the same time of molding the auxiliary passage in the resin molding process, it is possible to maintain the relationship between the auxiliary passage, and the measurement flow path surface 430 and the flow rate detection unit 602 with extremely high accuracy. That is, the circuit board 400 is fixed to the housing 302 in the resin molding process, it is possible to position and fix the circuit board 400 inside the mold for molding of the housing 302 including the auxiliary passage with high accuracy. The auxiliary passage is molded with high accuracy and the circuit board 400 is fixed with high accuracy when the high-temperature thermoplastic resin is injected into the mold. Accordingly, it is possible to suppress the error or the variation generated for each of the circuit board 400 to the extremely small value. As a result, it is possible to significantly improve the measurement accuracy of the circuit board 400.

### 7. Circuit Configuration of Air Flow Rate Detection Device 300

### 7.1 Entire Circuit Configuration of Air Flow Rate Detection Device 300

FIG. 11-1 is a circuit diagram of the air flow rate detection device 300. The air flow rate detection device 300 includes a flow rate detection circuit 601 and a temperature and humidity detection circuit 701.

The flow rate detection circuit 601 is provided with the flow rate detection unit 602 including a heat-generating body 608 and a processor 604. The processor 604 controls the amount of heat generation of the heat-generating body 608 of the flow rate detection unit 602, and further, outputs a signal indicating a flow rate based on output of the flow rate detection unit 602 to a microcomputer 415 via a terminal 662. In order to perform the above-described process, the processor 604 is provided with a central processing unit (hereinafter, referred to as the CPU) 612, an input circuit 614, an output circuit 616, a memory 618 which holds data indicating a relationship between a corrected value or a measurement value, and a flow rate, and a power supply circuit 622 which supplies a fixed voltage to each circuit that requires the voltage. DC power is supplied to the power supply circuit 622 from an external power supply such as an in-vehicle battery via the terminal 664 and a ground terminal (not illustrated).

The flow rate detection unit 602 is provided with the heat-generating body 608 to heat the gas 30 to be measured. A voltage V1 is supplied to a collector of a transistor 606 forming a current supply circuit of the heat-generating body 608 from the power supply circuit 622, a control signal is applied to a base of the transistor 606 from the CPU 612 via the output circuit 616, and current is supplied to the heat-generating body 608 from the transistor 606 via a terminal 624 based on this control signal. The amount of current to be supplied to the heat-generating body 608 is controlled by the control signal which is applied to the transistor 606 forming the current supply circuit of the heat-generating body 608 from the CPU 612 via the output circuit 616. The processor 604 controls the amount of heat generation of the heat-generating body 608 such that the temperature of the gas 30 to be measured becomes higher than the initial temperature by predetermined temperature, for example, 100°C after being heated by the heat-generating body 608.

The flow rate detection unit 602 includes a heat generation control bridge 640 configured to control the amount of heat generated by the heat-generating body 608 and a flow rate detection bridge 650 configured to measure a flow rate. A fixed voltage V3 is supplied to one end of the heat generation control bridge 640 from the power supply circuit 622 via a terminal 626, and the other end of the heat generation control bridge 640 is connected to a ground terminal 630. In addition, a fixed voltage V2 is supplied to one end of the flow rate detection bridge 650 from the power supply circuit 622 via the terminal 625, and the other end of the flow rate detection bridge 650 is connected to the ground terminal 630.

The heat generation control bridge 640 includes a resistance 642 serving as a resistance temperature detector whose resistance value is changed based on the temperature of the heated gas 30 to be measured. The bride circuit is configured of the resistance 642, a resistance 644, a resistance 646, and a resistance 648. A potential difference between an intersection A between the resistance 642 and the resistance 646 and an intersection B between the resistance 644 and the resistance 648 is input to the input circuit 614 via the terminal 627 and the terminal 628, and the CPU 612 controls the current to be supplied from the transistor 606 to control the amount of heat generation of the heat-generating body 608 such that the potential difference between the intersection A and the intersection B becomes a predetermined value (zero volts in this embodiment). The flow rate detection circuit 601 illustrated in FIG. 11-1 heats the gas 30 to be measured using the heat-generating body 608 such that the temperature of the gas 30 to be measured becomes higher than the original temperature thereof by a fixed temperature, for example, 100°C constantly. Each resistance value of the resistances forming the heat generation control bridge 640 is set such that the potential difference between the intersection A and the intersection B becomes the zero volts when the temperature of the gas 30 to be measured heated by the heat-generating body 608 becomes higher than the initial temperature by the fixed temperature, for example, 100°C constantly, in order to perform the heating control with high accuracy. Accordingly, in the flow rate detection circuit 601, the CPU 612 controls the current supplied to the heat-generating body 608 such that the potential difference between the intersection A and the intersection B becomes the zero volts.

The flow rate detection bridge 650 is configured of four resistance temperature detectors including a resistance 652, a resistance 654, a resistance 656, and a resistance 658. These four resistance temperature detectors are arranged along the flow of the gas 30 to be measured such that the resistance 652 and the resistance 654 are arranged on the upstream side in the flow path of the gas 30 to be measured as compared to the heat-generating body 608, and the resistance 656 and the resistance 658 are arranged on the downstream side in the flow path of the gas 30 to be measured as compared to the heat-generating body 608. In addition, the resistance 652 and the resistance 654 are arranged to have substantially the same distance from the heat-generating body 608 in order to raise the measurement accuracy, and the resistance 656 and the resistance 658 are arranged to have substantially the same distance from the heat-generating body 608.

A potential difference between an intersection C between the resistance 652 and the resistance 656 and an intersection D between the resistance 654 and the resistance 658 is input to the input circuit 614 via a terminal 631 and a terminal 632. Each resistance of the flow rate detection bridge 650 is set such that the potential difference between the intersection C and the intersection D becomes zero, for example, in the state of the flow of the gas 30 to be measured being zero in order to enhance the measurement accuracy. Accordingly, the CPU 612 outputs an electric signal indicating that the flow rate of the main passage 124 is zero from the terminal 662 based on the measurement result that the flow rate of the gas 30 to be measured is zero in the zero-volt state, for example of the potential difference between the intersection C and the intersection D.

When the gas 30 to be measured flows in an arrow direction of FIG. 11-1, the resistance 652 and the resistance 654 arranged on the upstream side are cooled by the gas 30 to be measured, and the resistance 656 and the resistance 658 arranged on the downstream side of the gas 30 to be measured are heated by the gas 30 to be measured which has been warmed up by the heat-generating body 608 so that each temperature of the resistance 656 and the resistance 658 increases. Thus, the potential difference is generated between the intersection C and the intersection D of the flow rate detection bridge 650, and this potential difference is input to the input circuit 614 via the terminal 631 and the terminal 632. The CPU 612 retrieves data indicating a relationship between the potential difference and the flow rate of the main passage 124, which has been stored in the memory 618, based on the potential difference between the intersection C and the intersection D of the flow rate detection bridge 650, and obtains the flow rate of the main passage 124. The electric signal indicating the flow rate of the main passage 124 obtained in this manner is output via the terminal 662. Incidentally, the terminal 664 and the terminal 662 illustrated in FIG. 11-1 are denoted by new reference numbers, but is included in the connection terminal 412 illustrated in FIG. 9-1 which has been described above.

The data indicating a relationship between the potential difference between the intersection C and the intersection D and the flow rate of the main passage 124 is stored in the memory 618, and further, correction data for reduction of a measurement error such as a variation, obtained based on an actually measured value of the gas after production of the circuit board 400 is stored therein.

The temperature and humidity detection circuit 701 includes an input circuit, such as an amplifier and A/D converter, to which a detection signal is input from the temperature sensor 453 and the humidity sensor 422, an output circuit, a memory which holds data indicating a relationship between a corrected value or temperature, and absolute humidity, and the power supply circuit 622 which supplies a fixed voltage to each circuit that requires the voltage. Each signal output from the flow rate detection circuit 601 and the temperature and humidity detection circuit 701 is input to the microcomputer 415. The microcomputer 415 includes a flow rate calculation unit, a temperature calculation unit, and an absolute humidity calculation unit, and calculates a flow rate, temperature, and absolute humidity, which are the physical quantities of the gas 30 to be measured, based on the signal, and outputs the calculated value to an ECU 200.

The air flow rate detection device 300 and the ECU 200 are connected via a communication cable, and communication using a digital signal is performed based on a communication standard such as SENT, LIN, and CAN. In the present embodiment, the signal is input to an LIN driver 420 from the microcomputer 415, and LIN communication is performed through the LIN driver 420. Information output to the ECU 200 from the LIN driver of the air flow rate detection device 300 is output after being subject to superimposition through digital communication using one or two communication cables.

The absolute humidity calculation unit of the microcomputer 415 performs a process of calculating absolute humidity based on information on relative humidity output from the humidity sensor 422 and the temperature information, and correcting the absolute humidity based on an error. The corrected absolute humidity calculated by the absolute humidity calculation unit is used for various kinds of engine operation control in a control unit 62 of an ECU 18. In addition, the ECU 18 can also directly use information on the total error for various kinds of engine operation control.

Incidentally, the description has been given in the above-described embodiment illustrated in FIG. 11 regarding the case where the air flow rate detection device 300 includes the LIN driver 420 to perform the LIN communication, but the invention is not limited thereto. As illustrated in FIG. 11-2, the communication with the microcomputer 415 may be directly performed without using the LIN communication.

As above, the embodiments of the present invention have been described in detail, but the present invention is not limited to the above-described embodiments, and various design modifications can be made within the scope of the claims. For example, the above-described embodiments have been described in detail in order to describe the present invention in an easily understandable manner, and are not necessarily limited to one including the entire configuration that has been described above. In addition, some configurations of a certain embodiment can be substituted by configurations of another embodiment, and further, a configuration of another embodiment can be added to a configuration of a certain embodiment. Further, addition, deletion or substitution of other configurations can be made with respect to some configurations of each embodiment.

### Reference Signs List

- 30: gas to be measured
- 124: main passage
- 300: air flow rate detection device
- 302: housing
- 400: circuit board
- 401: substrate main body
- 403: protruding portion
- 602: flow rate detection unit
- 801: diaphragm
- 803: sheet-like adhesive
- 804: notch
- 802: diaphragm rear surface cavity
- 805: air flow direction
- 806: resin material

## Claims

1. An air flow rate measurement device comprising:
a flow rate detection unit (602) which includes a diaphragm (801) detecting an air flow rate of a gas to be measured;
a circuit board (400) to which the flow rate detection unit is mounted; wherein the flow rate detection unit (602) and the circuit board (400) are fixed by a sheet-like adhesive (803) such that a surface parallel to the flow direction of the flow rate detection unit (602) is opened, and is sealed by an elastic body that is arranged perpendicular to the flow direction, **characterised in that**:
a housing (302) houses the circuit board (400), and
said surface is opened by a notch (804) in the sheet-like adhesive, in a direction that extends more along an axis that is parallel to the flow direction than along an axis that is perpendicular to the flow direction.

2. The air flow rate measurement device according to claim 1, wherein
the elastic body is made of the sheet-like adhesive (803).

3. The air flow rate measurement device according to claim 1, wherein
the elastic body is made of a resin material (806).

4. The air flow rate measurement device according to claim 1, wherein
the flow rate detection unit (602) is mounted inside a cavity which is provided in the circuit board (400).

5. The air flow rate measuring device according to claim 4, wherein the circuit board (400) is configured using a material made of glass epoxy resin.

## Patentansprüche

1. Luftdurchflussmengen-Messvorrichtung, die Folgendes umfasst:
eine Durchflussmengendetektionseinheit (602), die eine Membran (801), die eine Luftdurchflussmenge eines zu messenden Gases detektiert, enthält; und
eine Leiterplatte (400), an der die Durchflussmengendetektionseinheit montiert ist; wobei
die Durchflussmengendetektionseinheit (602) und die Leiterplatte (400) durch einen flächigen Klebstoff (803) befestigt sind, derart, dass eine Oberfläche parallel zur Durchflussrichtung der Durchflussmengendetektionseinheit (602) geöffnet ist und durch einen elastischen Körper, der senkrecht zur Durchflussrichtung angeordnet ist, versiegelt ist, **dadurch gekennzeichnet, dass**:
ein Gehäuse (302) die Leiterplatte (400) aufnimmt und
die Oberfläche durch eine Kerbe (804) im flächigen Klebstoff in einer Richtung geöffnet ist, die mehr entlang einer Achse verläuft, die parallel zur Durchflussrichtung ist, als entlang der Achse, die senkrecht zur Durchflussrichtung ist.

2. Luftdurchflussmengen-Messvorrichtung nach Anspruch 1, wobei
der elastische Körper aus dem flächigen Klebstoff (803) gebildet ist.

3. Luftdurchflussmengen-Messvorrichtung nach Anspruch 1, wobei
der elastische Körper aus einem Harzmaterial (806) gebildet ist.

4. Luftdurchflussmengen-Messvorrichtung nach Anspruch 1, wobei
die Durchflussmengendetektionseinheit (602) in einem Hohlraum montiert ist, der in der Leiterplatte (400) vorgesehen ist.

5. Luftdurchflussmengen-Messvorrichtung, nach Anspruch 4, wobei
die Leiterplatte (400) unter Verwendung eines Materials konfiguriert ist, das aus Glasepoxidharz hergestellt ist.

## Revendications

1. Dispositif de mesure de débit d'air comprenant :
une unité de détection de débit (602) qui inclut un diaphragme (801) détectant un débit d'un gaz qu'il s'agit de mesurer ;
une carte à circuits (400) sur laquelle l'unité de détection de débit est montée ; dans lequel
l'unité de détection de débit (602) et la carte à circuits (400) sont fixées par un adhésif similaire à une feuille (803) de sorte qu'une surface parallèle à la direction d'écoulement de l'unité de détection de débit (602) est ouverte et est étanchée au moyen d'un corps élastique qui est agencé perpendiculairement à la direction d'écoulement, **caractérisé en ce que** :
un boîtier (302) renferme la carte à circuits (400) et
ladite surface est ouverte au moyen d'une encoche (804) dans l'adhésif similaire à une feuille, dans une direction qui s'étend davantage le long d'un axe qui est parallèle à la direction d'écoulement que le long d'un axe qui est perpendiculaire à la direction d'écoulement.

2. Dispositif de mesure de débit d'air selon la revendication 1, dans lequel
le corps élastique est constitué de l'adhésif similaire à une feuille (803).

3. Dispositif de mesure de débit d'air selon la revendication 1, dans lequel
le corps élastique est constitué d'un matériau en résine (806).

4. Dispositif de mesure de débit d'air selon la revendication 1, dans lequel
l'unité de détection de débit (602) est montée à l'intérieur d'une cavité qui est prévue dans la carte à circuits (400).

5. Dispositif de mesure de débit d'air selon la revendication 4, dans lequel
la carte à circuits (400) est configurée en utilisant un matériau constitué de résine époxy vitreuse.
